# NEUE EUROPÄISCHE PATENTSCHRIFT

(11) **EP 3 947 861 B2**
(45) Veröffentlichungstag und Bekanntmachung des Hinweises auf die Entscheidung über den Einspruch: **26.11.2025**
(45) Hinweis auf die Patenterteilung: 15.02.2023
(21) Anmeldenummer: 20715797.5
(22) Anmeldetag: 25.03.2020
(51) Int. Cl.: E04G 21/04, B33Y 30/00, E04G 21/02

(54) **VORRICHTUNG FÜR DAS AUSBRINGEN EINES FLUIDEN PROZESSWERKSTOFFS**
APPARATUS FOR OUTPUT OF A FLUID PROCESS MATERIAL
DISPOSITIF DE DISTRIBUTION DE MATÉRIAU DE PROCESSUS FLUIDE

(30) Priorität: 27.03.2019 DE 102019107833
(43) Veröffentlichungstag der Anmeldung: 09.02.2022
(73) Patentinhaber: Putzmeister Engineering GmbH, 72631 Aichtal (DE)
(72) Erfinder: HUTH, Tobias, 70327 Stuttgart (DE); RIEGER, Traugott, 71093 Weil im Schönbuch (DE)
(74) Vertreter: Gauss, Nikolai
(86) Internationale Anmeldenummer: PCT/EP2020/058290
(87) Internationale Veröffentlichungsnummer: WO 2020/193601

(56) Entgegenhaltungen:
- EP-A1- 3 947 861
- WO-A1-2018/202842
- WO-A2-2015/065936
- CN-A- 106 639 324
- CN-U- 204 728 708
- DE-A1- 10 060 077
- DE-A1- 10 240 180
- DE-A1- 102017 110 586
- JP-A- 2015 221 992
- US-A1- 2013 295 338
- MATHIAS NäTHER, VENKATESH NAIDU, NERELLA MARTIN, KRAUSE GüNTER, KUNZE VIKTOR, MECHTCHERINE RAINER, SCHACH, VERLAG FRAUNH: "Beton-3D-Druck – Machbarkeitsuntersuchungen zu kontinuierlichen und schalungsfreien Bauverfahren durch 3D-Formung von Frischbeton", 31 December 2017 (2017-12-31), pages 1 - 106, XP055708204, Retrieved from the Internet <URL:https://www.irbnet.de/daten/rswb/17079004398.pdf> [retrieved on 20200623]

## Beschreibung

Die Erfindung betrifft eine Autobetonpumpe mit einer Vorrichtung für das Ausbringen eines fluiden Prozesswerkstoffs in Form von Beton, Mörtel, Putz oder einem mit Quarzsand versetzten Klebstoff, mit einem als ein Knickmast ausgebildeten Verteilermast mit mehreren an Gelenken miteinander verbundenen Mastarmen, mit einer aus mehreren über Rohrbögen und Drehkupplungen gelenkig miteinander verbundenen, entlang den einzelnen Mastarmen geführten und an diesen befestigten Rohrsegmenten bestehenden Prozesswerkstoff-Förderleitung, mit einer als eine Kolbenpumpe oder als eine Rotorschlauchpumpe ausgebildeten Prozesswerkstoff-Förderpumpe, die für das Zuführen des Prozesswerkstoffs in die Prozesswerkstoff-Förderleitung dient und mit einem an dem Verteilermast aufgenommenen Werkzeug mit einer Einrichtung für das Ausbringen des Prozesswerkstoffs.

Aus der EP 1 319 110 B1 ist eine derartige Vorrichtung bekannt. Dort ist eine Autobetonpumpe mit einem Verteilermast beschrieben, die für das Ausbringen von Beton als Prozesswerkstoff ausgelegt ist. Die Autobetonpumpe hat einen Verteilermast mit einem aus mehreren Mastarmen zusammengesetzten Knickmast, dessen Mastarme um jeweils horizontale, zueinander parallele Knickachsen mittels je eines Antriebsaggregats begrenzt verschwenkbar sind. An dem Knickmast der Autobetonpumpe ist eine Prozesswerkstoff-Förderleitung aufgenommen, die in einen an der Mastspitze des Verteilermasts festgelegten Endschlauch als ein Werkzeug mit einer Einrichtung für das Ausbringen des Prozesswerkstoffs mündet.

Aus der CN106639324 ist eine Autobetonpumpe nach der Stand der Technik bekannt.

Zur Herstellung von Bauwerken aus Beton werden herkömmlich Schalungen eingesetzt, die mit Beton befüllt werden. Diese Schalungen sind aufwändig und teuer in der Herstellung und sie müssen nach dem Aushärten des Betons mit erheblichem Aufwand entfernt werden. So wie bei der industriellen Fertigung von Werkstücken hält der sogenannte 3D Druck auch in die Herstellung von Bauwerken Einzug.

Aufgabe der Erfindung ist es, eine Vorrichtung bereitzustellen, die für das Herstellen von Bauwerken mittels sogenannter generativer Fertigungsverfahren eingesetzt werden kann.

Diese Aufgabe wird mit der in Anspruch 1 angegebenen Autobetonpumpe gelöst.

Vorteilhafte Ausführungsformen der Erfindung sind in den abhängigen Ansprüchen angegeben.

Der Erfindung beruht auf dem Gedanken, dass das kontinuierliche Ausbringen eines Prozesswerkstoffs wie z. B. vorzugsweise schnell aushärtender Beton, Mörtel oder Klebstoff mit einem an einem Verteilermast aufgenommenen Werkzeug ermöglicht, ein Bauwerk schichtweise aufzubauen, indem das Werkzeug verlagert wird. Die Erfinder haben erkannt, dass das schichtweise Auftragen eines Bauwerks mit hoher Präzision erfolgen kann, indem der Prozesswerkstoff möglichst nicht pulsierend sondern mit einem konstanten Massestrom an dem Bauwerk bereitgestellt wird. Die Erfindung schlägt deshalb vor, dass das Werkzeug mit der Einrichtung für das Ausbringen des Prozesswerkstoffs einen mit dem Prozesswerkstoff aus der Prozesswerkstoff-Förderleitung beaufschlagbaren Pufferbehälter mit einem Aufnahmevolumen für das Puffern von über die Prozesswerkstoff-Förderleitung pulsierend zugeführtem Prozesswerkstoff aufweist und ein Ausbringorgan für das Ausbringen von dem Pufferbehälter zugeführten Prozesswerkstoff an einer Ausbringstelle enthält. Indem Prozesswerkstoff an einem Bauwerk an exakt definierten Positionen bereitgestellt wird, ist es möglich, Bauwerke ohne aufwändige ortsfeste Schalungen und ohne stationäre oder mobile Gerüstbauten oder Hebebühnen herzustellen, auf denen Bauarbeiter manuelle Tätigkeiten verrichten. Insbesondere indem das Werkzeug mit der Einrichtung für das Ausbringen des Prozesswerkstoffs eine Fördervorrichtung für das kontinuierliche Zuführen des Prozesswerkstoffs aus dem Pufferbehälter an das Ausbringorgan enthält, kann eine präzises Dosierung eines an einem Bauwerk ausgetragenen Prozesswerkstoff-Massestroms gewährleistet werden.

Eine Idee der Erfindung ist es, dass die Fördervorrichtung ein Gehäuse aufweist, das einen mit dem Aufnahmevolumen des Pufferbehälters über eine bodenseitige Öffnung in dem Pufferbehälter verbundenen Hohlraum hat, der mit dem Ausbringorgan kommuniziert. Eine Idee der Erfindung ist es auch, dass in dem Hohlraum des Gehäuses wenigstens eine Förderschnecke für das kontinuierliche Zuführen des Prozesswerkstoffs an das Ausbringorgan angeordnet ist. Die Fördervorrichtung kann als ein Druckluftförderer ausgebildet sein. Die Erfindung schlägt insbesondere vor, dass das Ausbringorgan als eine den Prozesswerkstoff formende Düse ausgebildet ist. Von Vorteil ist es dabei, wenn Steuermittel für das Verändern der Einstellung der Fördervorrichtung vorgesehen sind, um damit ein Variieren des Prozesswerkstoff-Massestroms an einem Bauwerk zu ermöglichen.

Indem Mittel für das Verlagern einer Prozesswerkstoff-Austrittöffnung der Düse relativ zu dem Pufferbehälter vorgesehen sind, lässt sich der Ort des an einem Bauwerk ausgebrachten Prozesswerkstoff-Massestroms verändern, ohne dass hierfür große Massen bewegt werden müssen.

Die Erfindung sieht vor, dass das Werkzeug in einem Drehgelenk an dem Verteilermast drehbar gelagert ist. Das Drehgelenk hat eine horizontale Drehachse. Dazu, weist das Werkzeug einen an das Drehgelenk angeschlossenen Haltearm auf.

Für das Bewegen des Werkzeugs mit der Einrichtung für das Ausbringen des Prozesswerkstoffs an dem Haltearm um die Drehachse gibt es ein Antriebsmittel. Das Antriebsmittel weist einen an einen Mastarm angeschlossenen Hydrozylinder auf, der auf eine an den Haltearm angeschlossene erste Umlenkhebelanordnung wirkt, die in einem eine erste horizontale Drehachse aufweisenden Drehgelenk an einer an dem Mastarm um eine weitere horizontale Drehachse drehbeweglich gelagerten Lenkeranordnung aufgenommen ist, wobei die Umlenkhebelanordnung ein aus dem Hydrozylinder um die erste horizontale Drehachse eingeleitetes Drehmoment auf den Haltearm überträgt. Von Vorteil ist ein Schnellwechsler für das schnelle und einfache lösbare Verbinden des Haltearms mit einem den Pufferbehälter und das Ausbringorgan aufweisenden Abschnitt des Werkzeugs. Diese Maßnahme ermöglicht ein schnelles Austauschen von Pufferbehälter und Ausbringorgan des Werkzeugs. Diese Maßnahme ermöglicht auch das Aufnehmen von verschiedenen Werkzeugabschnitten mit unterschiedlichen Funktionalitäten an dem Haltearm, wie z.B. einer Säge oder eines Lastaufnahmemittels anstelle des Pufferbehälters und des Ausbringorgans oder auch das Aufnehmen eines Anschlussarms mit einer Betonförderleitung und mit einem Endschlauch.

Es ist außerdem möglich, dass die Prozesswerkstoff-Förderleitung eine Drehkupplung mit einer zu der Drehachse des das Werkzeug mit der Einrichtung für das Ausbringen des Prozesswerkstoffs aufnehmenden Drehgelenks koaxiale Drehachse hat.

Eine erfindungsgemäße Vorrichtung für das Ausbringen eines fluiden Prozesswerkstoffs enthält ein System für das Steuern und/oder Regeln der Lage des Werkzeugs für das Ausbringen des Prozesswerkstoffs durch Bewegen um die Drehachse. Das System hat für das Steuern und/oder Regeln der Lage des Werkzeugs einen Lagesensor für das Erfassen der Lage des Ausbringorgans. Das System kann auch einen Winkelsensor für das Erfassen eines Drehwinkels des Haltearms zu dem das Werkzeug mit der Einrichtung für das Ausbringen des Prozesswerkstoffs aufnehmenden Mastarm in dem Drehgelenk enthalten.

Das Werkzeug kann mit der Prozesswerkstoff-Förderleitung verbunden sein. Von Vorteil ist es, wenn das Werkzeug Mittel für das Weiterverarbeiten des durch die Prozesswerkstoff-Förderleitung geförderten Prozesswerkstoffs enthält, insbesondere Mittel für das Zuführen von Prozesswerkstoff-Zusatzstoffen in den Pufferbehälter. Der Pufferbehälter ist bevorzugt trichterförmig.

Zu bemerken ist, dass das Werkzeug mit der Einrichtung für das Ausbringen des Prozesswerkstoffs günstiger Weise an der Mastspitze des Verteilermasts oder in dem Bereich der Mastspitze des Verteilermasts angeordnet ist.

Im Folgenden wird die Erfindung anhand eines in der Zeichnung in schematischer Weise dargestellten Ausführungsbeispiels näher erläutert.

Es zeigen:
- Fig. 1: eine Seitenansicht einer Autopumpe mit einem Verteilermast und einer Einrichtung für das Ausbringen von Prozesswerkstoff;
- Fig. 2: eine erste Teilansicht des Verteilermasts;
- Fig. 3: eine zweite Teilansicht des Verteilermasts;
- Fig. 4: eine dritte Teilansicht des Verteilermasts;
- Fig. 5: und
- Fig. 6: Teilansichten eines weiteren Verteilermasts mit einem Schnellwechsler für das Auswechseln von an den Haltearm eines an dem Verteilermast aufgenommenen Werkzeugs angeschlossenen Werkzeugabschnitten.

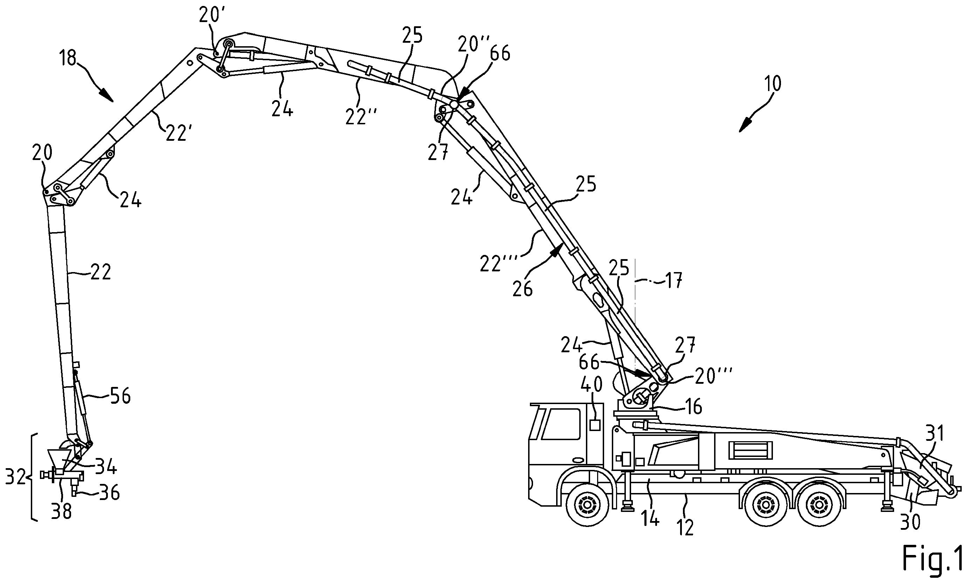

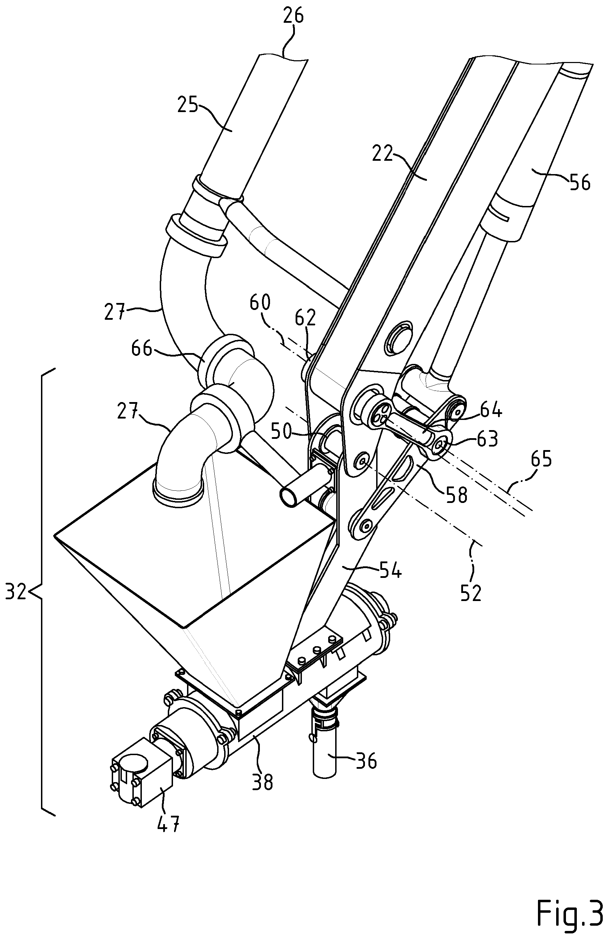

Die Autobetonpumpe 10 in Fig. 1 ist ein Großraumroboter. Sie dient für das Ausbringen eines fluiden Prozesswerkstoffs, z. B. Transportbeton oder Mörtel aber auch Putz oder fließfähiger Klebstoff, insbesondere Klebstoff, der mit einem Füllmaterial, z. B. Quarzsand versetzt ist. Sie hat ein Fahrgestell 12 mit einem Unterbau 14, der einen Verteilermast 18 trägt, der sich z.B. bis auf eine Länge von 60 m ausfalten lässt. Der Verteilermast 18 ist ein Knickmast. Er ist an dem Unterbau 14 an einem Mastbock 16 aufgenommen und hat Gelenke 20, 20', 20" und 20"', in denen die Mastarme 22, 22', 22" und 22‴ mittels als Hydrozylinder ausgebildeten Antriebsaggregaten 24 jeweils eine horizontale Drehachse bewegt werden können. An dem Mastbock 16 kann der Verteilermast 18 um die eine vertikale Drehachse 17 mit einem hydraulischen Antrieb (nicht gezeigt) gedreht werden. Der Verteilermast 18 enthält eine Prozesswerkstoff-Förderleitung 26 mit Rohrsegmenten 25, die über Drehkupplungen 66 und Rohrbögen 27 verbunden sind. Die Prozesswerkstoff-Förderleitung 26 kommuniziert mit einer hydraulischen Prozesswerkstoff-Förderpumpe 30. Die Prozesswerkstoff-Förderpumpe 30 weist einen Materialaufgabebehälter 31 für das Aufnehmen von Prozesswerkstoff auf. Die Prozesswerkstoff-Förderpumpe 30 ist eine Kolbenpumpe, z. B. eine Kolbenpumpe, wie sie in der EP 2 867 531 B1 in Absatz [0014] unter Bezugnahme auf die Fig. 3a bis Fig. 3d als Zweizylinder-Dickstoffpumpe beschreiben ist. Eine solche Kolbenpumpe enthält zwei Förderzylindern, in denen zwei gegenläufige Förderkolben bewegt werden, die den Prozesswerkstoff aus dem Materialaufgabebehälter durch eine Rohrweiche abwechselnd in die Prozesswerkstoff-Förderleitung 26 bewegen. Die Prozesswerkstoff-Förderpumpe 30 kann allerdings grundsätzlich auch eine andere für das Fördern von Dickstoffen geeignete Pumpe sein, z. B. eine Rotorschlauchpumpe, wie sie in der WO 2013/12624 A1 anhand der Fig. 1 bis Fig. 7 auf den Seiten 3 bis 10 beschrieben ist.

Der Verteilermast 18 trägt ein Werkzeug 32 mit einer Einrichtung für das Ausbringen des Prozesswerkstoffs. An dem Verteilermast 18 kann das Werkzeug 32 mittels eines als Hydrozylinders 56 ausgebildeten hydraulischen Antriebsmittels um eine horizontale Drehachse geschwenkt werden.

Die Einrichtung für das Ausbringen des Prozesswerkstoffs in dem Werkzeug 32 hat einen trichterförmige Pufferbehälter 34. Die Prozesswerkstoff-Förderleitung 26 mündet in den Pufferbehälter 34. Der Pufferbehälter 34 kann so mit dem durch die Prozesswerkstoff-Förderleitung 26 zugeführten Prozesswerkstoff beaufschlagt werden. Der Pufferbehälter 34 hat ein Aufnahmevolumen, welches das Puffern des durch die Prozesswerkstoff-Förderleitung 26 pulsierend zugeführten Prozesswerkstoffs ermöglicht. Die Einrichtung für das Ausbringen des Prozesswerkstoffs in dem Werkzeug 32 hat ein als eine Düse ausgebildetes Ausbringorgan 36 und enthält eine Fördervorrichtung 38 für das kontinuierliche Zuführen des in dem Pufferbehälter 34 gepufferten Prozesswerkstoffs aus dem Pufferbehälter 34 an das Ausbringorgan 36.

Die Autobetonpumpe 10 weist ein System für das Steuern der Prozesswerkstoff-Förderpumpe 30 und des Werkzeugs 32 sowie der Antriebsaggregate 24 in dem Verteilermast 18 für das Bewegen der Mastarme 22, 22', 22" und 22‴ und für das Steuern des hydraulischen Antriebs für das Bewegen des Verteilermasts 18 um die vertikale Drehachse 17 mit einer Steuerung 40 auf. Die Steuerung 40 ermöglicht damit, sowohl eine Bewegung des Ausbringorgans 36 des Werkzeugs 32 als auch unterschiedliche Verteilermast-Posen und unterschiedliche Relativpositionen des Werkzeugs 32 zu dem Verteilermast einzustellen.

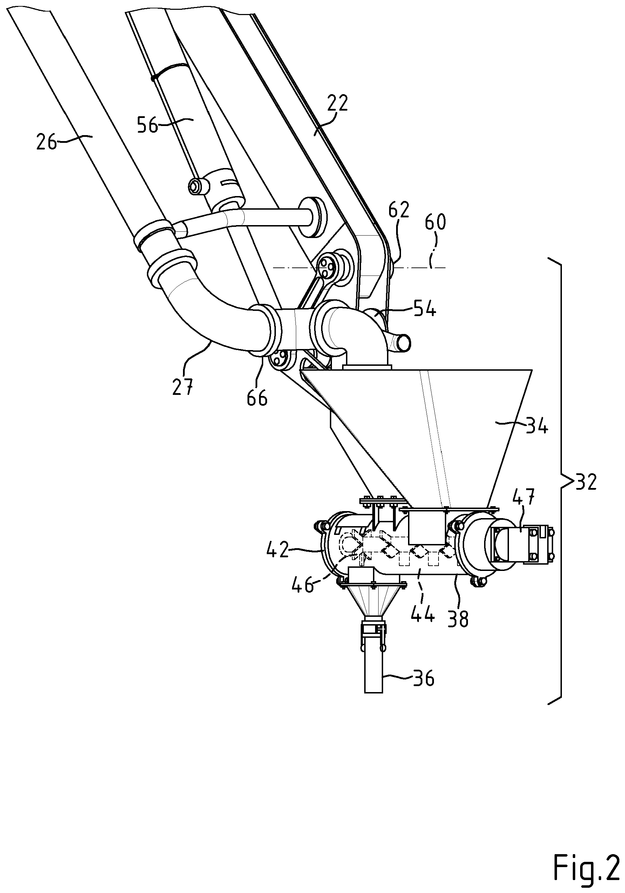

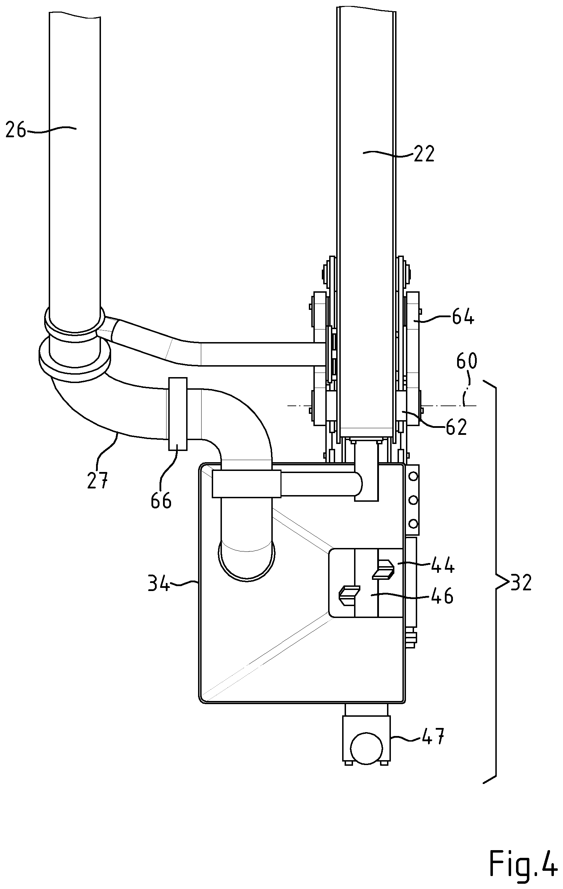

Die Fig. 2 ist eine Teilansicht des Verteilermasts 18. In der Fig. 3 und der Fig. 4 sind weitere Ansichten des Verteilermasts 18 in unterschiedlichen Perspektiven zu sehen.

Die Fördervorrichtung 38 ist ein Schneckenförderer. Die Fördervorrichtung 38 weist ein Gehäuse 42 auf, das einen an den Pufferbehälter 34 angeschlossenen Hohlraum 44 hat, der mit dem Ausbringorgan 36 kommuniziert. Der Hohlraum 44 des Gehäuses 42 ist mit dem Aufnahmevolumen des Pufferbehälters 34 über eine bodenseitige Öffnung in dem Pufferbehälter 34 verbunden. In dem Hohlraum 44 des Gehäuses 42 ist wenigstens eine Förderschnecke 46 für das kontinuierliche Zuführen des Prozesswerkstoffs an das Ausbringorgan 36 angeordnet. Die Förderschnecke 46 wird mittels eines hydraulischen Antriebsmotors 47 angetrieben. Zu bemerken ist, dass als Antrieb der Förderschnecke 46 insbesondere auch ein elektrischer Antriebsmotor vorgesehen sein kann. Die Fördervorrichtung 38 kann in einer alternativen Ausführungsform auch zwei gelgenläufig betriebene Förderschnecken enthalten, um damit pastöse Medien zu bewegen, die in den Hohlraum 44 aus dem Pufferbehälter 34 zugeführt werden. Darüber hinaus kann die Fördervorrichtung 38 in einer alternativen Ausführungsform allerdings auch z. B. als ein Druckluftförderer gestaltet sein.

Das als eine Düse ausgebildete Ausbringorgan 36 dient für das Formen des Prozesswerkstoffs. Das Ausbringorgan 36 formt den mittels der Fördervorrichtung 38 aus dem Pufferbehälter 34 zugeführten Prozesswerkstoff zu einer Prozesswerkstoff-Raupe, wenn der Prozesswerkstoff kontinuierlich aus dem Pufferbehälter 34 mittels der Fördervorrichtung 38 zugeführt wird. An einer Ausbringstelle 48 des Ausbringorgans 36 kann der Prozesswerkstoff aus dem Pufferbehälter 34 damit mit einem nach Ort und Zeit exakt definierten Volumenstrom bereitgestellt werden, um damit ein präzises schichtweises Auftragen von Material nach der Art eines 3D-Druckers zu ermöglichen.

Die Einrichtung für das Ausbringen des Prozesswerkstoffs in dem Werkzeug 32 ist in einem an dem Verteilermast 18 aufgenommenen Drehgelenk 50 um eine Drehachse 52 drehbar gelagert. Die Drehachse 52 des Drehgelenks 50 ist eine horizontale Drehachse. Die Einrichtung für das Ausbringen des Prozesswerkstoffs in dem Werkzeug 32 weist einen an das Drehgelenk 50 angeschlossenen Haltearm 54 auf und hat als ein Antriebsmittel für das Bewegen der Einrichtung für das Ausbringen des Prozesswerkstoffs an dem Haltearm 54 um die Drehachse 52 den an den Mastarm 22 angeschlossenen Hydrozylinder 56. Der Hydrozylinder 56 wirkt auf ein Koppelgetriebe mit einer an den Haltearm 54 angeschlossenen ersten Umlenkhebelanordnung 58, die in einem eine erste horizontale Drehachse 60 aufweisenden Drehgelenk 62 an einer an dem Mastarm 22 in einem weiteren Drehgelenk 63 um eine weitere horizontale Drehachse 65 drehbeweglich gelagerten Lenkeranordnung 64 aufgenommen ist. Die Umlenkhebelanordnung 58 überträgt ein aus dem Hydrozylinder 56 um die erste horizontale Drehachse 60 eingeleitetes Drehmoment auf den Haltearm 54. Durch geeignetes Einstellen des Hydrozylinders 56 kann der Pufferbehälter 34 auch bei Verändern der Pose des Verteilmasts 18 stets in einer waagrechten Position gehalten werden.

Die Prozesswerkstoff-Förderleitung 26 weist eine Drehkupplung 66 mit einer zu der Drehachse 52 des die Einrichtung für das Ausbringen des Prozesswerkstoffs aufnehmenden Drehgelenks 50 koaxiale Drehachse auf.

Das System in der Steuerung 40 der Autobetonpumpe 10 ermöglicht bevorzugt das Steuern und/oder Regeln einer horizontalen Lage des Werkzeugs 32 mit der Einrichtung für das Ausbringen des Prozesswerkstoffs durch Bewegen um die Drehachse 52 des die Einrichtung für das Ausbringen des Prozesswerkstoffs aufnehmenden Drehgelenks 50. Dem System für das Steuern und/oder Regeln einer Lage des Werkzeugs 32 in der Steuerung 40 kann auch mit einem Lagesensor für das Erfassen der Lage des Ausbringorgans und/oder mit einem Winkelsensor für das Erfassen des Winkels zwischen der Einrichtung für das Ausbringen des Prozesswerkstoffs und dem die Einrichtung für das Ausbringen des Prozesswerkstoffs in dem Drehgelenk 50 aufnehmenden Mastarm 22 wirkungsverbunden sein.

Zu bemerken ist, dass bei einer weiteren modifizierten Ausführungsform der Erfindung vorgesehen sein kann, dass die geometrische Form der aus der Düse an einer Ausbringstelle austretenden Prozesswerkstoff-Raupe einstellbar ist, z. B. indem die Düse einen durch Steuermittel verstellbaren Düsenmund mit einer Austrittsöffnung hat, deren Geometrie veränderbar ist. Insbesondere kann bei einer weiteren, modifizierten Ausführungsform des Werkzeugs 32 alternativ oder zusätzlich vorgesehen sein, dass es Mittel für das Verlagern einer Prozesswerkstoff-Austrittöffnung der Düse relativ zu dem Pufferbehälter 34 gibt. Zu bemerken ist auch, dass das Werkzeug 32 Mittel für das Weiterverarbeiten des durch die Prozesswerkstoff-Förderleitung 26 geförderten Prozesswerkstoffs enthalten kann, insbesondere Mittel für das Zuführen von Prozesswerkstoff-Zusatzstoffen in den Pufferbehälter 34 durch eine direkt an das Gehäuse 42 der Fördervorrichtung 38 angeschossene Leitung für das Zuführen von Prozesswerkstoff-Zusatzstoffen, die in den Hohlraum 44 mit der Förderschnecke 46 mündet, oder durch eine Leitung für das Zuführen von Prozesswerkstoff-Zusatzstoffen wie z. B. Luft oder gasförmige, flüssige oder feste Chemikalien, die mit einer Düsenkammer in dem als Düse ausgebildeten Ausbringorgan 36 für den Prozesswerkstoff kommuniziert und die wie die Prozesswerkstoff-Förderleitung 26 an den Mastarmen 22, 22', 22" und 22‴ des Verteilermasts 18 aufgenommen ist.

Von Vorteil ist es, wenn das Werkzeug 32 in einer zu der vorstehend beschriebenen Ausführungsform modifizierten Ausführungsform der Erfindung an den Verteilermast 18 auch mittels eines Schnellwechslers angeschlossen werden kann.

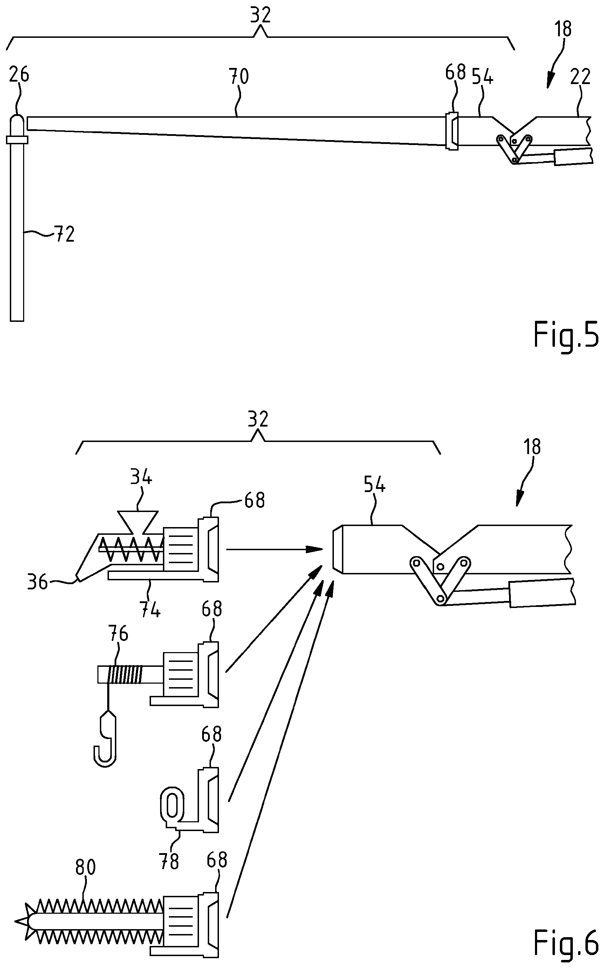

Die Fig. 5 und Fig. 6 zeigen Teilansichten eines weiteren Verteilermasts 18 mit einem Schnellwechsler 68 für das Auswechseln von Werkzeugabschnitten, die an den Haltearm 54 eines an dem Verteilermast 18 aufgenommenen Werkzeugs 32 angeschlossenen sind.

Das in der Fig. 5 gezeigte Werkzeug 32 hat als mittels des Schnellwechslers 68 mit dem Haltearm 54 lösbar verbundenen Werkzeugabschnitt einen Anschlussarm 70 mit einer Prozesswerkstoff-Förderleitung 26 und mit einem Endschlauch 72.

Die Fig. 6 zeigt als unterschiedliche Werkzeugabschnitte, die mittels des Schnellwechslers 68 an den Haltearm 54 anschließbar sind, eine Druckkopf- und/oder Spritzeinrichtung 74, erste und zweite Lastaufnahmemittel 76, 78 und eine Säge 80. Die Druckkopf- und/oder Spritzeinrichtung 74 enthält einen Pufferbehälter 34 und hat ein Ausbringorgan 36 für das Ausbringen eines durch eine Prozesswerkstoff-Förderleitung des Verteilermasts 18 zugeführten Prozesswerkstoffs.

Zusammenfassend ist folgendes festzuhalten: Eine Vorrichtung für das Ausbringen eines fluiden Prozesswerkstoffs, insbesondere eines Prozesswerkstoffs in Form von Beton, Mörtel oder Klebstoff hat einen Verteilermast mit mehreren an Gelenken 20, 20', 20", 20‴ miteinander verbundenen Mastarmen 22, 22', 22", 22‴ mit einer aus mehreren, vorzugsweise über Rohrbögen 27 und Drehkupplungen 66 gelenkig miteinander verbundenen, entlang den einzelnen Mastarmen 22, 22', 22", 22‴ geführten und an diesen befestigten Rohrsegmenten 25 bestehenden Prozesswerkstoff-Förderleitung 26 und ein an dem Verteilermast 18 aufgenommenes Werkzeug 32 mit einer Einrichtung für das Ausbringen des Prozesswerkstoffs. Die Einrichtung für das Ausbringen des Prozesswerkstoffs weist einen mit dem Prozesswerkstoff aus der Prozesswerkstoff-Förderleitung 26 beaufschlagbaren Pufferbehälter 34 auf und enthält ein Ausbringorgan 36 für das Ausbringen von dem Pufferbehälter 34 zugeführten Prozesswerkstoff an einer Ausbringstelle 48.

### Bezugszeichenliste:

- 10: Autobetonpumpe
- 12: Fahrgestell
- 14: Unterbau
- 16: Mastbock
- 17: vertikale Drehachse
- 18: Verteilermast
- 20, 20', 20", 20‴: Gelenk
- 22, 22', 22", 22‴: Mastarm
- 24: Antriebsaggregat
- 25: Rohrsegment
- 26: Prozesswerkstoff-Förderleitung
- 27: Rohrbogen
- 30: Prozesswerkstoff-Förderpumpe
- 31: Materialaufgabebehälter
- 32: Werkzeug
- 34: Pufferbehälter
- 36: Ausbringorgan
- 38: Fördervorrichtung
- 40: Steuerung
- 42: Gehäuse
- 44: Hohlraum
- 46: Förderschnecke
- 47: hydraulischer Antriebsmotor
- 48: Ausbringstelle
- 50: Drehgelenk
- 52: Drehachse
- 54: Haltearm
- 56: Hydrozylinder
- 58: erste Umlenkhebelanordnung
- 60: erste horizontale Drehachse
- 62: Drehgelenk
- 63: weiteres Drehgelenk
- 64: Lenkeranordnung
- 65: weitere horizontale Drehachse
- 66: Drehkupplung
- 68: Schnellwechsler
- 70: Anschlussarm
- 72: Endschlauch
- 74: Druckkopf- und/oder Spritzeinrichtung
- 76, 78: Lastaufnahmemittel
- 80: Säge

## Patentansprüche

1. Autobetonpumpe für das Ausbringen eines fluiden Prozesswerkstoffs in Form von Beton, Mörtel, Putz oder einem mit Quarzsand versetzten Klebstoff, mit einem als ein Knickmast ausgebildeten Verteilermast mit mehreren an Gelenken (20, 20', 20", 20‴) miteinander verbundenen Mastarmen (22, 22', 22", 22‴), mit einer aus mehreren über Rohrbögen (27) und Drehkupplungen (66) gelenkig miteinander verbundenen, entlang den einzelnen Mastarmen (22, 22', 22", 22‴) geführten und an diesen befestigten Rohrsegmenten (25) bestehenden Prozesswerkstoff-Förderleitung (26), mit einer als eine Kolbenpumpe oder als eine Rotorschlauchpumpe ausgebildeten Prozesswerkstoff-Förderpumpe (30), die für das Zuführen des Prozesswerkstoffs aus einem Materialaufgabebehälter (31) in die Prozesswerkstoff-Förderleitung (26) und das Fördern des Prozesswerkstoffs in der Prozesswerkstoff-Förderleitung (26) dient, und mit einem an dem Verteilermast (18) aufgenommenen Werkzeug (32) mit einer Einrichtung für das Ausbringen des Prozesswerkstoffs,
wobei
das Werkzeug (32) einen mit dem Prozesswerkstoff aus der Prozesswerkstoff-Förderleitung (26) beaufschlagbaren Pufferbehälter (34) mit einem Aufnahmevolumen für das Puffern von über die Prozesswerkstoff-Förderleitung (26) pulsierend zugeführtem Prozesswerkstoff aufweist und ein Ausbringorgan (36) für das Ausbringen von dem Pufferbehälter (34) zugeführten Prozesswerkstoff an einer Ausbringstelle sowie eine Fördervorrichtung (38) für das kontinuierliche Zuführen des Prozesswerkstoffs aus dem Pufferbehälter (34) an das Ausbringorgan (36) enthält, die ein Gehäuse (42) aufweist, das einen mit dem Aufnahmevolumen des Pufferbehälters (34) über eine bodenseitige Öffnung in dem Pufferbehälter (34) verbundenen Hohlraum (44) hat, der mit dem Ausbringorgan (36) kommuniziert, wobei in dem Hohlraum (44) wenigstens eine Förderschnecke (46) für das kontinuierliche Zuführen des Prozesswerkstoffs an das Ausbringorgan (36) angeordnet ist, wobei das Werkzeug (32) in einem Drehgelenk (50) an dem Verteilermast (18) drehbar gelagert ist und einen an das Drehgelenk (50) angeschlossenen Haltearm (54) aufweist und ein Antriebsmittel für das Bewegen der Einrichtung für das Ausbringen des Prozesswerkstoffs an dem Haltearm (54) um eine horizontale Drehachse (52) vorgesehen ist, das einen Mastarm (22) angeschlossenen Hydrozylinder (56) aufweist, der auf einen Antrieb zum Drehen des den Haltearm aufweisenden Armes relativ zu dem Mastarm mit einer an den Haltearm (54) angeschlossenen Umlenkhebelanordnung (58) wirkt, die in einem eine erste horizontale Drehachse (65) aufweisenden Drehgelenk (62) an einer an dem Mastarm (22) um eine weitere horizontale Drehachse (60) drehbeweglich gelagerten Lenkeranordnung (64) aufgenommen ist, wobei die Umlenkhebelanordnung (58) ein aus dem Hydrozylinder (56) um die erste horizontale Drehachse (65) eingeleitetes Drehmoment auf den Haltearm (54) überträgt, wobei ein System für das Steuern und/oder Regeln der Lage des Werkzeugs (32) für das Ausbringen des Prozesswerkstoffs durch Bewegen um die Drehachse (52) vorgesehen ist, das einen Lagesensor für das Erfassen der Lage des Ausbringorgans (36) aufweist.

2. Autobetonpumpe nach Anspruch 1, **dadurch gekennzeichnet, dass** die Fördervorrichtung (38) als ein Druckluftförderer ausgebildet ist.

3. Autobetonpumpe nach Anspruch 1 oder 2, **dadurch gekennzeichnet, dass** das Ausbringorgan (36) als eine den Prozesswerkstoff formende Düse ausgebildet ist.

4. Autobetonpumpe nach Anspruch 3, **gekennzeichnet durch** Steuermittel für das Verlagern einer Prozesswerkstoff-Austrittöffnung der Düse relativ zu dem Pufferbehälter (34).

5. Autobetonpumpe nach einem der Ansprüche 1 bis 4, **gekennzeichnet durch** einen Schnellwechsler für das lösbare Verbinden des Haltearms (54) mit einem den Pufferbehälter (34) und das Aufbringorgan (36) aufweisenden Abschnitt des Werkzeugs (32).

6. Autobetonpumpe nach einem der Ansprüche 1 bis 5, **dadurch gekennzeichnet, dass** die Prozesswerkstoff-Förderleitung (26) eine Drehkupplung (66) mit einer zu der Drehachse (52) des das Werkzeug (32) mit der Einrichtung für das Ausbringen des Prozesswerkstoffs aufnehmenden Drehgelenks (50) koaxiale Drehachse (52) hat.

7. Autobetonpumpe nach einem der Ansprüche 1 bis 6, **dadurch gekennzeichnet, dass** das System für das Steuern und/oder Regeln der Lage des Werkzeugs (32) einen Winkelsensor für das Erfassen eines Drehwinkels des Haltearms (54) zu dem das Werkzeug (32) mit der Einrichtung für das Ausbringen des Prozesswerkstoffs in dem Drehgelenk (50) aufnehmenden Mastarm (22) aufweist.

8. Autobetonpumpe nach einem der Ansprüche 1 bis 7, **dadurch gekennzeichnet, dass** das Werkzeug (32) Mittel für das Weiterverarbeiten des durch die Prozesswerkstoff-Förderleitung (26) geförderten Prozesswerkstoffs enthält, insbesondere Mittel für das Zuführen von Prozesswerkstoff-Zusatzstoffen in den Pufferbehälter.

9. Autobetonpumpe nach einem der Ansprüche 1 bis 8, **dadurch gekennzeichnet, dass** der Pufferbehälter (34) trichterförmig ist.

## Claims

1. Truck-mounted concrete pump for dispensing a fluid process material in the form of concrete, mortar, plaster, or adhesive mixed with quartz sand, comprising a distributor boom designed as an articulated boom and having a plurality of boom arms (22, 22', 22", 22‴) connected to each other at joints (20, 20', 20", 20‴), comprising a process material conveying line (26) consisting of a plurality of pipe segments (25) which are connected to each other in an articulated manner by pipe bends (27) and rotating couplings (66), are guided along the individual boom arms (22, 22', 22", 22‴) and are fixed thereto, comprising a process material conveying pump (30) designed as a piston pump or as a rotor hose pump, which is used to supply the process material from a material feed container (31) into the process material conveying line (26) and to convey the process material into the process material conveying line (26), and comprising a tool (32) which is received on the distributor boom (18) and has a device for dispensing the process material,
wherein
the tool (32) has a buffer container (34), which can be supplied with the process material from the process material conveying line (26) and has a receiving volume for buffering process material fed in a pulsed manner via the process material conveying line (26), and contains a dispensing element (36) for dispensing process material fed to the buffer container (34) at a dispensing point, and a conveying apparatus (38) for the continuous supply of the process material from the buffer container (34) to the dispensing element (36), which conveying apparatus has a housing (42) having a cavity (44) which is connected to the receiving volume of the buffer container (34) via an opening in the bottom of the buffer container (34) and communicates with the dispensing element (36), wherein at least one screw conveyor (46) for the continuous supply of the process material to the dispensing element (36) is arranged in the cavity (44), wherein the tool (32) is rotatably mounted in a swivel joint (50) on the distributor boom (18) and has a holding arm (54) connected to the swivel joint (50), and a drive means is provided for moving the device for dispensing the process material on the holding arm (54) about a horizontal axis of rotation (52), which drive means has a hydraulic cylinder (56) which is connected to a boom arm (22) and acts on a drive for rotating the arm having the holding arm relative to the boom arm with a deflection lever arrangement (58) connected to the holding arm (54), which deflection lever arrangement is received in a swivel joint (62), having a first horizontal axis of rotation (65), on a link arrangement (64) which is mounted on the boom arm (22) so as to be rotatable about a further horizontal axis of rotation (60), wherein the deflection lever arrangement (58) transmits a torque introduced from the hydraulic cylinder (56) about the first horizontal axis of rotation (60) to the holding arm (54), wherein a system is provided for open-loop and/or closed-loop control of the position of the tool (32) for dispensing the process material by moving said tool about the axis of rotation (52), said system having a position sensor for detecting the position of the dispensing element (36).

2. Truck-mounted concrete pump according to claim 1, **characterized in that** the conveying apparatus (38) is designed as a compressed air conveyor.

3. Truck-mounted concrete pump according to either claim 1 or claim 2, **characterized in that** the dispensing element (36) is designed as a nozzle which shapes the process material.

4. Truck-mounted concrete pump according to claim 3, **characterized by** control means for moving a process material outlet opening of the nozzle relative to the buffer container (34).

5. Truck-mounted concrete pump according to any of claims 1 to 4, **characterized by** a quick hitch for detachably connecting the holding arm (54) to a portion of the tool (32) that has the buffer container (34) and the dispensing element (36).

6. Truck-mounted concrete pump according to any of claims 1 to 5, **characterized in that** the process material conveying line (26) has a rotating coupling (66) having an axis of rotation (52) which is coaxial relative to the axis of rotation (52) of the swivel joint (50) receiving the tool (32) having the device for dispensing the process material.

7. Truck-mounted concrete pump according to any of the claims 1 to 6, **characterized in that** the system for open-loop and/or closed-loop control of the position of the tool (32) has an angle sensor for detecting a rotation angle of the holding arm (54) relative to the boom arm (22) receiving the tool (32) having the device for dispensing the process material in the swivel joint (50).

8. Truck-mounted concrete pump according to any of claims 1 to 7, **characterized in that** the tool (32) contains means for further processing the process material conveyed through the process material conveying line (26), in particular means for supplying process material additives into the buffer container.

9. Truck-mounted concrete pump according to any of claims 1 to 8, **characterized in that** the buffer container (34) is funnel-shaped.

## Revendications

1. Pompe à béton automotrice pour la distribution d'un matériau de processus fluide sous forme de béton, de mortier, de crépi ou de colle mélangée à du sable de quartz, comportant un mât de distribution conçu sous forme de mât articulé et comportant plusieurs bras de mât (22, 22', 22", 22‴) reliés les uns aux autres au niveau d'articulations (20, 20', 20", 20"'), comportant une conduite de transport de matériau de processus (26) constituée de plusieurs segments de tuyau (25) reliés les uns aux autres de manière articulée par l'intermédiaire de coudes de tuyau (27) et d'accouplements rotatifs (66), guidés le long des bras de mât (22, 22', 22", 22‴) individuels et fixés à ceux-ci, comportant une pompe de transport de matériau de processus (30) conçue sous la forme de pompe à piston ou de pompe péristaltique, laquelle est utilisée pour l'acheminement du matériau de processus, à partir d'un réservoir d'alimentation en matériau (31), dans la conduite de transport de matériau de processus (26) et pour le transport du matériau de processus dans la conduite de transport de matériau de processus (26), et comportant un outil (32) reçu au niveau du mât de distribution (18) et doté d'un moyen pour la distribution du matériau de processus,
dans laquelle
l'outil (32) présente un réservoir tampon (34) pouvant être chargé avec le matériau de processus à partir de la conduite de transport de matériau de processus (26) et comportant un volume de réception pour le tamponnage de matériau de processus acheminé de manière pulsée par l'intermédiaire de la conduite de transport de matériau de processus (26), et comporte un organe de distribution (36) pour la distribution du matériau de processus acheminé depuis le réservoir tampon (34) au niveau d'un point de distribution ainsi qu'un dispositif de transport (38) pour l'acheminement continu du matériau de processus depuis le réservoir tampon (34) à l'organe de distribution (36), lequel dispositif présente un boîtier (42) qui comprend une cavité (44) reliée au volume de réception du réservoir tampon (34) par l'intermédiaire d'une ouverture côté inférieur dans le récipient tampon (34), laquelle cavité communique avec l'organe de distribution (36), au moins une vis transporteuse (46) pour l'acheminement continu du matériau de processus à l'organe de distribution (36) étant disposée dans la cavité (44), l'outil (32) étant monté rotatif dans une articulation rotative (50) sur le mât de distribution (18) et présentant un bras de maintien (54) raccordé à l'articulation rotative (50), et un moyen d'entraînement pour le déplacement du moyen pour la distribution du matériau de processus étant prévu sur le bras de maintien (54) autour d'un axe de rotation horizontal (52), lequel moyen d'entraînement présente un vérin hydraulique (56) raccordé à un bras de mât (22) et agit sur un entraînement pour faire tourner le bras présentant le bras de maintien par rapport au bras de mât à l'aide d'un agencement de levier de renvoi (58) raccordé au bras de maintien (54), lequel agencement est reçu dans une articulation rotative (62) présentant un premier axe de rotation horizontal (65) au niveau d'un agencement d'articulation (64) monté mobile en rotation sur le bras de mât (22) autour d'un autre axe de rotation horizontal (60), l'agencement de levier de renvoi (58) transmettant un couple, introduit depuis le vérin hydraulique (56) autour du premier axe de rotation horizontal (60), au bras de maintien (54), un système étant prévu pour la commande et/ou la régulation de la position de l'outil (32) pour la distribution du matériau de processus par déplacement autour de l'axe de rotation (52), le système présentant un capteur de position pour la détection de la position de l'organe de distribution (36).

2. Pompe à béton automotrice selon la revendication 1, **caractérisée en ce que** le dispositif de transport (38) est réalisé sous forme de transporteur pneumatique.

3. Pompe à béton automotrice selon la revendication 1 ou 2, **caractérisée en ce que** l'organe de distribution (36) est réalisé sous forme de buse formant le matériau de processus.

4. Pompe à béton automotrice selon la revendication 3, **caractérisée par** des moyens de commande pour le déplacement d'une ouverture de sortie de matériau de processus de la buse par rapport au réservoir tampon (34).

5. Pompe à béton automotrice selon l'une des revendications 1 à 4, **caractérisée par** une attache rapide pour la liaison amovible du bras de maintien (54) à une section de l'outil (32), laquelle section présente le réservoir tampon (34) et l'organe de distribution (36).

6. Pompe à béton automotrice selon l'une des revendications 1 à 5, **caractérisée en ce que** la conduite de transport de matériau de processus (26) comprend un accouplement rotatif (66) comportant un axe de rotation (52) coaxial à l'axe de rotation (52) de l'articulation rotative (50) recevant l'outil (32) comportant le moyen pour la distribution du matériau de processus.

7. Pompe à béton automotrice selon l'une des revendications 1 à 6, **caractérisée en ce que** le système pour la commande et/ou la régulation de la position de l'outil (32) présente un capteur d'angle pour la détection d'un angle de rotation du bras de maintien (54) par rapport au bras de mât (22) recevant l'outil (32) comportant le moyen pour la distribution du matériau de processus dans l'articulation rotative (50).

8. Pompe à béton automotrice selon l'une des revendications 1 à 7, **caractérisée en ce que** l'outil (32) comporte des moyens pour le traitement ultérieur du matériau de processus transporté à travers la conduite de transport de matériau de processus (26), en particulier des moyens pour l'acheminement d'additifs de matériau de processus dans le réservoir tampon.

9. Pompe à béton automotrice selon l'une des revendications 1 à 8, **caractérisée en ce que** le réservoir tampon (34) est en forme d'entonnoir.
